# EUROPEAN PATENT APPLICATION

(11) **EP 1 659 511 A1**
(43) Date of publication of application: **24.05.2006**
(21) Application number: 05025129.7
(22) Date of filing: 17.11.2005
(51) Int. Cl.: G06F 19/00, G06F 17/30

(54) **Image archiving system and method for handling new and legacy archives**

(30) Priority: 18.11.2004 US 628556 P
(71) Applicant: Cedara Software Corp., Mississauga, Ontario L4V 1S7 (CA)
(72) Inventor: Lee, Simon, Markham,Ontario L6C 2T2 (CA)
(74) Representative: Flaccus, Rolf-Dieter

(57) **Abstract**

An image archiving system is provided comprising at least one modality for creating images, at least on workstation for viewing and analyzing the images, at least one archive for storing the images, a proxy to handle the data communication between the modality, workstation and archive and a network for communicably connecting the components of the system. Images and other data associated with the images to be archived may be sent to a proxy to determine which of the archives the images and other data should be stored and the proxy archives the images and other data in the appropriate archive.

## Description

### FIELD OF THE INVENTION:

The present invention relates to systems and methods for image archiving.

### DESCRIPTION OF THE PRIOR ART

In medical imaging, picture archiving and communication systems (PACS) are used for the storage, retrieval, distribution and presentation of images. These systems are comprised of computers or networks of computers with storage and communication capabilities. PACS may replace hard-copy methods of managing medical images such as film archives. These systems provide expanded possibilities in the field of medical imaging by providing the capability to perform off-site viewing and reporting, and enabling practitioners in various physical locations to view the same information simultaneously.

A typical PACS network uses a central server storing a database of images connected to one or more clients via a local area network (LAN) or wide area network (WAN). Clients are typically either workstations where the images are viewed and analyzed or modalities where the images are created. A full PACS will typically handle images from various modalities such as ultrasonography, radiography, magnetic resonance imaging (MRI), positron emission tomography (PET), computed tomography (CT) and X-rays.

Some of the benefits of using a PACS include the gradual elimination of on-site and off-site film storage which can be expensive, images can be distributed to multiple departments in minutes (e.g. to the emergency room (ER) and the intensive care unit (ICU)), the use of digital measurements and enhancements, and aiding in the elimination of delays associated with images that are unavailable or are misfiled. There are many other benefits associated with PACS. The use of these types of systems has become increasingly more justified as the cost of digital storage continues to decrease.

The medical images are usually stored in an independent format. The most common format for storing images is DICOM which stands for Digital Imaging and Communications in Medicine. DICOM is a comprehensive set of standards for handling, storing and transmitting information in the field of medical imaging. DICOM includes a file format definition and a network communication protocol. DICOM was established to enable the integration of scanners, servers, workstations and network hardware from multiple vendors to be used in a PACS.

DICOM Information Object Definitions (IOD) include a header with standardized as well as free-form fields and, if applicable, a body of image data. It should be noted that some DICOM IOD do not contain image data, for instance DICOM Key Image Note. A single DICOM IOD can also contain more than one image, which allows for the storage of image volumes and/or animations. Image data can be compressed using a variety of compression standards such as joint photographic experts group (JPEG), Lempel-Ziv-Welch (LZW) or run-length encoding (RLE).

The first PACS were deployed over ten years ago, and therefore there are a number of existing PACS sites in the world. Some owners of PACS may be upgrading to newer version software in order to support newer modalities such as PET/CT, DICOM Structured Report, Key Image Notes and Greyscale Presentation State. Some owners may even migrate to a new vendor. Archive migration generally poses a major challenge due to the shear volume (usually on the order of terabytes) of data involved in successfully completing the migration. The co-operation of both the existing and the new vendor may be needed which is often difficult as they usually are competing entities.

Software upgrades and new versions of PACS can occur periodically and when an institute decides to switch to a new PACS vendor, the institutes would either migrate all of the existing data to a new archive or would run both of the systems in parallel. Both of these outcomes have an impact on workflow and therefore discourages institutes to switch to other vendors even though the technologies provided by such vendors may be superior. Another possible scenario is that the institution may want to add a new system, such as mammography, while keeping an existing PACS.

It is therefore an object of the present invention to obviate or mitigate the above mentioned disadvantages.

### SUMMARY OF THE INVENTION

In one aspect, an image archiving system is provided. The image archiving system comprises at least one device capable of viewing images and handling data associated with the images; a plurality of archives, each of the plurality of archives capable of storing the images and the data associated with the images; a proxy handling data communication between the at least one device and the plurality of archives and determining a location at which each of the images is to be stored, the location comprising one of the plurality of archives; and a network communicably connecting the at least one device, the plurality of archives, and the proxy to enable the transfer of data therebetween.

In another aspect, a method for archiving a plurality of images is provided. The method uses an archiving system connected through a network and comprises the steps of sending an image to be archived to a proxy; the proxy determining a location at which the image is to be stored, the location comprising one of a plurality of archives; and the proxy storing the image at the location.

In yet another aspect a method for archiving a set of results using an archiving system connected through a network is provided, the results being associated with a corresponding image. The method comprises the steps of sending the results to a proxy; the proxy determining a location at which the results are to be stored, the location comprising one of a plurality of archives storing the corresponding image; and the proxy storing the results at the location and associating the results with the image.

### BRIEF DESCRIPTION OF THE DRAWINGS

An embodiment of the invention will now be described by way of example only with reference to the appended drawings wherein:

Figure 1 is a schematic representation of an image archiving system supporting new and legacy archives.

Figure 2 is a flow chart showing an image archiving procedure.

Figure 3 is a flow chart showing a data query.

Figure 4 is a flow chart showing a data retrieval procedure.

Figure 5 is a flow chart showing a results archiving procedure.

### DETAILED DESCRIPTION OF THE INVENTION

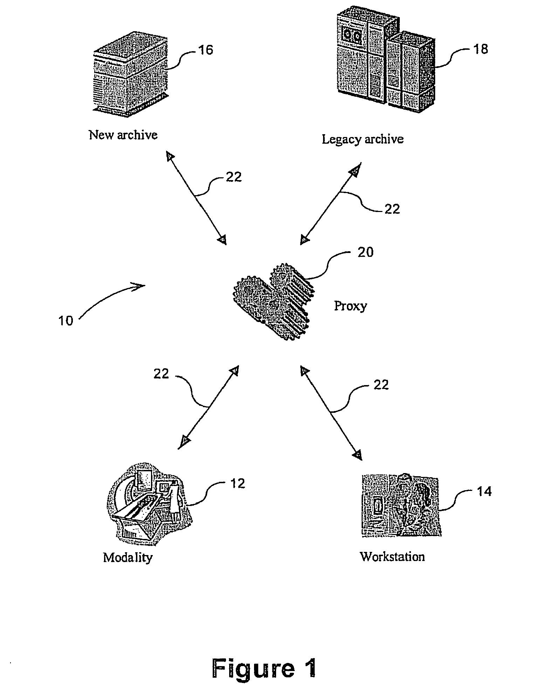

Referring therefore to Figure 1, an image archiving system is generally denoted by numeral 10. Images in the archiving system 10 are created by a device typically referred to as a modality 12 and are most often viewed using another device referred to as a workstation 14. Although Figure 1 shows one modality 12 and one workstation 14 it will be appreciated that there may be any number of modalities and workstations. Moreover, it will also be appreciated that one or more modality 12 and one or more workstation 14 may also constitute a single device or unit. The archiving system 10 would preferably be a PACS. The modality 12 is typically an imaging machine supporting one of the standard medical imaging modalities such as CT or MRI etc. The workstation 14 may be any device capable of sending and receiving digital information as well as viewing and manipulating this digital information. Typically, the workstation 14 will be a personal computer (PC) with a visual interface (e.g. a monitor), and one or more input devices such as a keyboard and mouse.

The archiving system 10 exemplified in Figure 1 has a new archive 16 supporting new modalities, software versions etc., and a legacy archive 18 which stores data from previous software versions, vendors, old modalities etc. A proxy 20 provides the central logic of the entire archiving system 10. The proxy 20 may hide the backend storage systems 16, 18 from the external users (e.g. modality 12 and workstation 14) so that these external systems 12, 14 communicate with a single node. This node will preferably support the DICOM standard and may be capable of interfacing with formats supporting new and old modalities. Communication is facilitated by a network 22. Although the network 22 is not explicitly shown, it will be appreciated that the arrows identified by numeral 22 in Figure 1 are representative of the communicable connections provided by the network 22.

The proxy 20, in part, contains the logic to save and retrieve data to and from the appropriate storage (e.g. new archive 16 or legacy archive 18). The proxy 20 is preferably implemented using a single software module that proxies all data requests and routes the data to the corresponding storage system (e.g. new archive 16 or legacy archive 18) using the network 22. The modality 12 and workstation 14 may only need to communicate with a single node of the new software (e.g. through the proxy 20) and the logic behind the data retrieval will then generally be hidden from the user. Consequently, the archive system 10 may appear to be a single system but really provides seamless archiving for multiple archive storages, the storages being connected to the network 22 and being governed by the proxy 20.

It will be appreciated that although Figure 1 depicts a single new archive 16 and a single legacy archive 18, there may be any number of each. The proxy 20 provides a central communication node for the modality 12 and workstation 14 regardless of the number of new or legacy archives incorporated into the archive system 10.

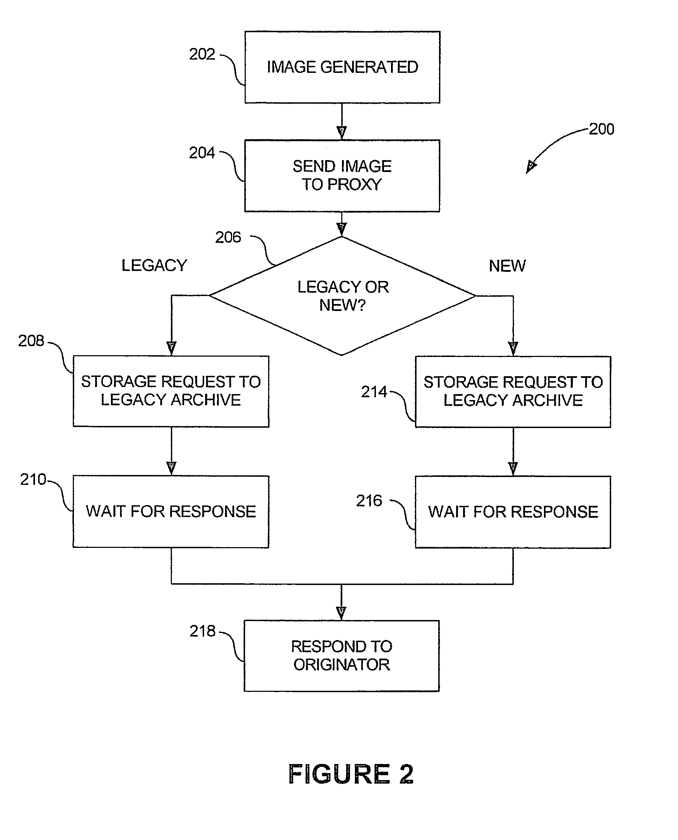

The proxy 20 in general, provides the central logic of the archive system 10 and contains the software that preferably proxies all data requests. Therefore, the proxy 20 is preferably responsible for executing all storage and retrieval procedures. An exemplary image archiving procedure 200 is shown in Figure 2. The modality 12 generates an image in its respective format at step 202. This image may then be sent to the proxy 20 at step 204. The proxy 20 may then determine whether the image should be archived in e.g. the new archive 16 or the legacy archive 18 at step 206.

The determination of which archive should store a particular image is typically based on predetermined criteria, such as the formats supported by the particular archive, and whether or not new formats are to be added as supplemental data to the image. For example, a legacy archive 18 may support CT and MRI images, and the new archive 16 may additionally support presentation (PR) objects. In such an example, when a CT scanner sends a study to the proxy 20 at step 204, the proxy 20 would forward the study to the legacy archive 18 at step 206, since the legacy archive supports such a format. However, when a user later reviews a study (an example is explained later) and saves a PR object, the proxy 20 would forward the object to the new archive 16, since it supports such a format. Therefore, the original image data is saved to the legacy archive 18 and the new object to the new archive 16, i.e. certain objects may be saved to different archives even though they are related in some way.

Typically, the legacy archive 18 is used to maintain old data and would thus be used for reading data only. New objects (e.g. PR object of a review) are forwarded by the proxy 20 to the new archive 16, since the new archive supports PR objects. This avoids the need for migration of data from the legacy archive 18 to the new archive 16. The proxy 20 may also incorporate rules that are based on proximity to the workstation 14. For example, objects may be retrieved from certain archives or stored in certain archives based on how accessible a particular archive is for the user at the workstation 14. This may be preferable when different archives can perform similar tasks, and the one with the best accessibility would then be chosen. It will be appreciated that other rule sets may be used based on the capabilities of the system 10 and the availability of new and legacy archives.

If the legacy archive 18 is to continue to act as the storage location for that particular modality, the proxy 20 may forward a storage request 208 to the legacy archive 18. If, for example, the legacy archive 18 cannot handle the format of the modality 12, a new DICOM class is being used, or if it is desired to use the new archive 16 for storing all new data, the proxy 20 may then forward the storage request 214 to the new archive 16.

As the storage request is being processed in either case (e.g. steps 208 or 214), the proxy 20 may be required to wait for a response from the archive whether or not the storage succeeds at steps 210, 216 respectively. The proxy 20 may then communicate directly to the modality 12 through the network 22 to report the success or failure of the archiving procedure 200 at step 218.

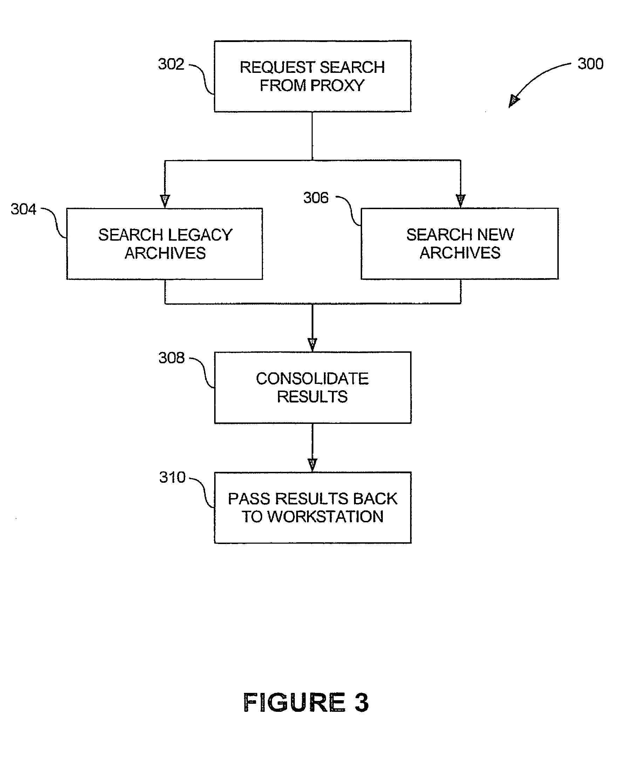

Images that have been archived may be requested by a user at the workstation 14. The user may first perform a query 300 from the workstation 14 for a typical reading of data stored in the archives 16, 18. A reading may include a review of the current study and prior studies if available and/or applicable. This query 300 is shown in Figure 3. The workstation 14 may then make a request to the proxy 20 to search for a particular patient as well as studies associated with that patient at step 302. The proxy 20 will typically search both the new archive 16 and the legacy archive 18 for the patient studies. This is shown as a set of parallel steps 304 and 306. It will be appreciated that steps 304 and 306 may also be done sequentially and need not be done in parallel. The results from searching both archives may be consolidated at step 308 and these results can be passed back to the workstation 14 at step 310.

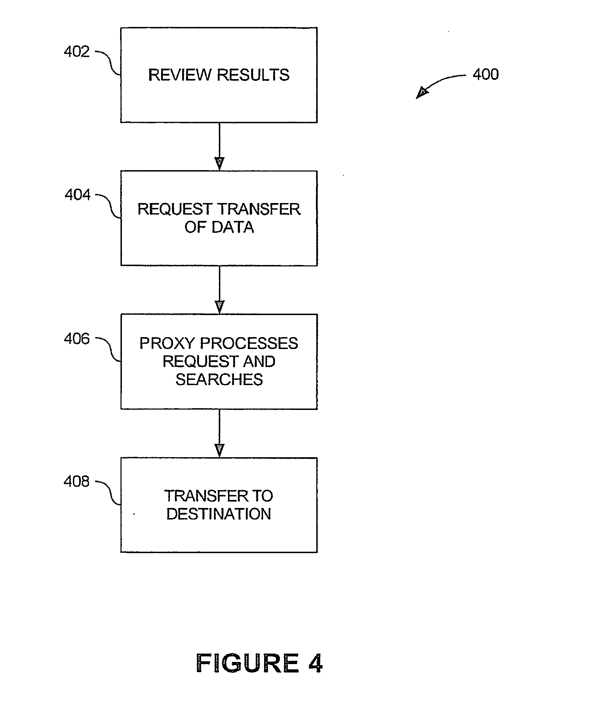

The results provided to the user of the workstation 14 in step 310 would typically be reviewed and the user would then decide which studies they would like transferred to the workstation 14. This data retrieval procedure 400 is shown in Figure 4. The results 310 from the query 300 can be reviewed at step 402. During the review 402, the user will typically decide at this time which studies it wishes to transfer to the workstation 14.

The user may request the transfer of the desired study or studies through the proxy 20 at step 404. This request will also typically include a request to transfer data to be stored at the destination, that being the workstation 14 in this example. The proxy 20 may then process the request at step 406. In this step the proxy 20 will generally have information from the query 300 pertaining to the location of the data (e.g. new archive 16 or legacy archive 18). The proxy's request 406 will typically include searching the archives 16, 18 to determine whether or not the data is available or even exists. The data, if located, may then be transferred by the proxy 20 back to the destination (e.g. the workstation 14) at step 408.

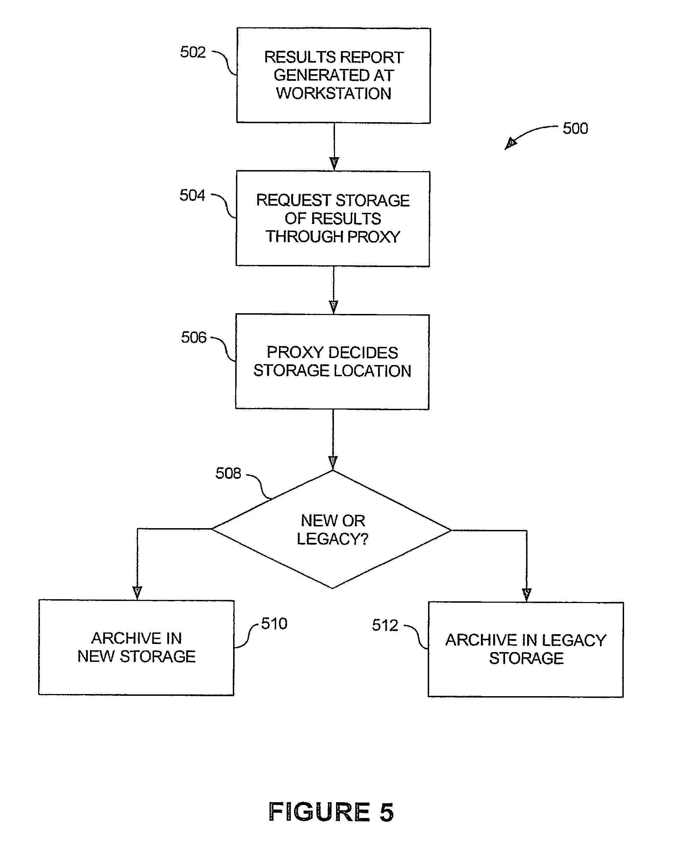

When a user reviews a study which has been transferred to them at the workstation 14, various readings may be done and results from these readings would then be archived with the data of the study. Results from a reading may include a DICOM structured report, DICOM Key Object Notes, or a DICOM Greyscale Presentation State. A procedure 500 for archiving results is shown in Figure 5. The results report(s) are generated by the user at the workstation 14 at step 502. A request may then be made to archive the results at step 504. This request is preferably made through the proxy 20. The proxy 20 may then decide at which location to store the results in step 506.

The studies being reviewed by the user may include data which has been archived in the new archive 16, the legacy archive 18 or both. Results from a reading may need to be archived in the legacy archive 18 but would typically be archived to the new archive 16 especially when a new DICOM format is being used. Other reasons may be dictated by the specific system and/or policies of the institute using the archive system 10. At step 508, the proxy 20 may then determine whether the results should be archived in, for example, the new archive 16 or the legacy archive 18. As discussed above, typically the results would be saved in the new archive 16, since the legacy archive 18 is preferably only used for reading old data. Based on this determination, the proxy 20 may then forward the results to either the new archive 16 or legacy archive 18 in steps 510 and 512 respectively.

Therefore, the proxy 20 preferably handles any procedure related to image retrieval and image archiving by providing a single node for the users of the modality 12 and workstation 14 to communicate with. This enables the archive system 10 to run new and legacy archives (e.g. archive 16 and archive 18) in parallel, while being substantially transparent to the users of the system 10. Accordingly, for example, PACS from different vendors using different DICOM class versions can be used by the archive system 10 without the need to migrate legacy images to a new system or to run more than one separate system requiring separate nodes for communication. Consequently, workflow is substantially unaffected by archive system upgrades, new modalities or a change in vendor.

It will be appreciated that although the present invention has been described in terms of an image archiving system suitable for archiving medical images using PACS and the DICOM standard, it is suitable for and may be used for other image archiving systems.

Although the invention has been described with reference to certain specific embodiments, various modifications thereof will be apparent to those skilled in the art without departing from the spirit and scope of the invention as outlined in the claims appended hereto.

## Claims

1. An image archiving system comprising:
(a) a plurality of archives, each capable of storing a plurality of images and data associated therewith;
(b) at least one device capable of viewing selected ones of said images and handling data associated therewith;
(c) a proxy handling data communication between said at least one device and said plurality of archives and determining a location at which each said images is to be stored, said location comprising one of said plurality of archives; and
(d) a network communicably connecting said at least one device, said plurality of archives, and said proxy to enable the transfer of data therebetween.

2. The image archiving system of claim 1 further comprising:
(e) at least one device capable of generating said images.

3. The image archiving system of claim 2 wherein said device capable of generating images supports one of the following modalities: ultrasonography, radiography, magnetic resonance imaging (MRI), positron emission tomography (PET), computed tomography (CT) and X-ray.

4. The image archiving system of claim 1 wherein one of said plurality of archives is a legacy archive and another of said plurality of archives is an archive supporting image formats that are additional to those handled by said legacy archive.

5. The image archiving system of claim 1 wherein said at least one device is a workstation comprising a visual interface and at least one input device.

6. The image archiving system of claim 1 wherein said proxy comprises a software module located on a server, said proxy intercepting requests from said at least one device for storage and retrieval of said images, and determining said location based on predetermined criteria.

7. The image archiving system of claim 6 wherein said predetermined criteria includes the format of said images and image formats supported by each of said plurality of archives.

8. The image archiving system of claim 1 wherein said images are medical images.

9. The image archiving system of claim 1 wherein said system supports the digital imaging and communications in medicine (DICOM) format.

10. A method for archiving a plurality of images using an archiving system connected through a network comprising the steps of:
(a) sending an image to be archived to a proxy;
(b) said proxy determining a location at which said image is to be stored, said location comprising one of a plurality of archives; and
(c) said proxy storing said image at said location.

11. The method of claim 10 wherein step (b) includes said proxy sending a request to said one of said plurality of archives if said one archive is a legacy archive, said request used by said one archive to determine if said one archive can support the format of said image, wherein if said one archive cannot support the format of said image, said proxy determines a new location at which to store said image.

12. The method of claim 10 further comprising the steps of:
(d) said proxy receiving a request from a workstation to obtain image data;
(e) said proxy searching each said plurality of archives and generating a result; and
(f) said proxy returning said result to said workstation.

13. The method of claim 12 further comprising the step of:
(g) said proxy receiving a further request based on said result to obtain one of said plurality of images and said proxy retrieving said one of said plurality of images and providing said one of said plurality of images for use by said workstation.

14. The method of claim 10 wherein said proxy considers each of said plurality of archives to optimize the choice of said location.

15. The method of claim 10 wherein said archiving system is a picture archiving and communication system (PACS) and said image is a medical image.

16. A method for archiving a set of results using an archiving system connected through a network, said results being associated with a corresponding image, said method comprising the steps of:
(a) sending said results to a proxy;
(b) said proxy determining a location at which said results are to be stored, said location comprising one of a plurality of archives storing said corresponding image; and
(c) said proxy storing said results at said location and associating said results with said image.

17. The method of claim 16 wherein at least one of said archives is a legacy archive and another of said plurality of archives is an archive supporting image formats that are new relative to those handled by said legacy archive, said proxy considering the format of said image corresponding to said results in determining said location.
